(19) Europäisches Patentamt / European Patent Office / Office européen des brevets

(11) **EP 4 474 872 A1**

(12) **EUROPEAN PATENT APPLICATION**

(43) Date of publication:
**11.12.2024 Bulletin 2024/50**

(21) Application number: **23178491.9**

(22) Date of filing: **09.06.2023**

(51) International Patent Classification (IPC):
**G01V 8/14** (2006.01)     **G02B 7/182** (2021.01)
**G02B 26/08** (2006.01)

(52) Cooperative Patent Classification (CPC):
**G01V 8/14; G02B 7/1824; G02B 7/198**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Datalogic IP Tech S.r.l.**
**40012 Calderara di Reno (BO) (IT)**

(72) Inventors:
- **Fioretti, Daniele**
  **40135 Bologna (IT)**
- **Macchia, Michele**
  **40069 Zola Predosa (IT)**

(74) Representative: **Schohe, Stefan**
**Schohe Patentanwaltskanzlei**
**Helmpertstraße 11a**
**80687 München (DE)**

(54) **LIGHT REDIRECTING OPTICAL MODULE FOR A LIGHT CURTAIN AND ITS USE IN A LIGHT CURTAIN**

(57)      The invention provides a light redirecting optical module for a light curtain comprising a passive optical element, especially a mirror or a prism, for changing the direction of an incident light beam, a carrier unit to which the passive optical element is fixed in a rigid manner, a support unit, wherein the carrier unit has a curved surface at a side facing away from the passive optical element and the support unit has a complementary curved surface facing the curved surface of the carrier unit, wherein the curved surfaces together form a rotary joint, engagement means for keeping the two curved surfaces engaged to each other so as to allow for a guided rotary movement of the two surfaces relative to each other. The invention further provides a passive component of a light curtain comprising one or more passive elements for redirecting a light beam received from an emitter of the light curtain such that the light beam leaving the passive component impinges on an associated receiver of the light curtain for detecting a light beam emitted by the emitter, wherein the passive component comprises one or more of such light redirecting optical modules and a method for aligning passive optical elements in such a passive component.

FIG. 2

## Description

The present invention relates to safety light curtains and in particular to the alignment of passive optical elements in a passive component of a safety light curtain that receives a light beam from a light emitter and redirects the light beam to a receiver for detecting the light beam sent out by the emitter.

In a safety light curtain using passive optical elements, such as mirrors or prisms, a light beam from an emitter at one side of the light curtain is redirected by one or more passive optical elements at the other side of the light curtain such that the light beam will be incident on a corresponding receiver that detects the light beam. Accordingly, the optical path of the light beam will have two sections extending between the emitter and the passive optical elements and between the passive optical elements and the receiver, respectively. If the light beam is interrupted in one of these sections, the safety light curtain creates a control signal that can be used to control the operation of other devices, e.g. an operation in response to the presence of a person or object in the space between the emitter/receiver and the passive optical elements, such as closing or opening a lock, stopping or starting the operation of a machine or generating or stopping an alarm. The receiver is in a fixed spatial relation to the associated emitter and frequently mounted in the same component of the safety light curtain as the emitter. In order for the safety light curtain to function properly the passive optical elements have to be precisely aligned so that the light beam from the emitter hits and is detected by the corresponding receiver. With a typical maximum working distance of several meters between the emitter/receiver and the passive optical elements, even a small angular error of about 0.2° can already cause the beam to miss the receiver. A precise alignment is even more difficult if there are a plurality of passive optical elements in the optical path redirecting the light beam back to the receiver.

A common design for a safety light curtain, typically having two to four beams, comprises an active component, i.e. a unit containing all active electronics and in particular both the transmitting and receiving elements, and a passive component, which is a unit that only comprises passive optical elements, such as mirrors or prisms, that redirect a light beam back to the active component to close an optical path from an emitter to a receiver. The alignment of the passive optical elements has to be performed manually, as it would be difficult and expensive to automate. This has proved to be cumbersome, time consuming and not entirely reliable in that elements that seem correctly aligned may still fail the next quality checks. One problem is that the operator performing the alignment is required to manipulate two or more different elements by hand, each of which can be subjected to translational and rotational movement and therefore has a total of six degrees of freedom. Accordingly, it is not easy to anticipate which movement is appropriate to properly align the passive optical elements in their entirety. Additionally, if mirrors are used as passive optical elements and a tilt movement to adjust the orientation of a mirror with regard to other optical elements is not around the center of the mirror, it will be necessary to make a correction by a translation following the tilt movement.

The problem underlying the invention is making the alignment of passive components in a safety light curtain faster and more reliable and to simplify the assembly of components of a safety light curtain.

To solve this problem, the invention provides a light redirecting optical module for a light curtain comprising a passive optical element, especially a mirror or a prism, for changing the direction of an incident light beam, a carrier unit to which the passive optical element is fixed in a rigid manner, a support unit, especially a support unit with means for mounting it to a support structure of an optical device, such as a housing or a rail, wherein the carrier unit has a curved surface, preferably a spherical surface, at a side facing away from the passive optical element and the support unit has a complementary curved surface facing the curved surface of the carrier unit, wherein the curved surfaces together form a rotary j oint, engagement means for keeping the two curved surfaces engaged to each other so as to allow for a guided rotary movement of the two surfaces relative to each other.

In the light redirecting optical module according to the invention the passive optical element can especially be a prism or a mirror. In specific implementations the mirror is a single mirror having a single reflecting surface or a double mirror having two plane reflecting surfaces.

The joint formed by the curved surfaces can especially be designed such that its rotary axis or axes intersect the center of the mirror surface of the single mirror or a symmetry point of the double mirror.

The light redirecting optical module according to the invention can especially comprise a handle for moving the carrier unit relative to the support unit to align a light beam redirected by the passive optical element with a target corresponding to a receiver of the light curtain. Related embodiments may provide that the handle is connected to the carrier unit and can be removed from the carrier unit.

The handle can be made in one piece with the carrier unit or with a part of the carrier unit. In this case, the handle comprises means for facilitating the separation of the handle from the carrier unit and may especially comprise a region of small thickness or diameter, a region of reduced material strength and/or a predetermined breaking point to facilitate breaking or cutting the handle off. In other embodiments the handle is connected to the carrier unit by connection means allowing a destruction-free separation of the handle from the carrier unit. For example, the handle may be connected to the carrier unit by a positive locking connection, e.g. a snap connection, or a force locking connection, e.g. a connection involving a clamping element. In such embodiments the handle can be released from the carrier unit in a destruction-free manner and, given the case, be reused.

In a specific embodiment the engagement means comprise a screw connecting the carrier unit and the support unit. The screw may cooperate with a threaded bore in one of the carrier unit or the support unit in such a way that the curved surface of the carrier unit and the curved surface of the support unit are kept in tight engagement, but are still moveable relative to each other. In alternative embodiments, a bolt with a head having a larger diameter than the stem of the bolt can be used instead of a screw. In still another embodiment a pin can be used instead of a screw so as to keep the curved surfaces of the carrier unit and of the support unit in position relative to each other. In such embodiments, a close engagement between the curved surface can be brought about by gravity or by separate means exerting a force pushing the two curved surfaces against each other.

The invention may provide that the carrier unit and/or the support unit are made of a material transparent to UV light at least in a region where the curved surfaces of the carrier unit and the support unit are in engagement with each other.

The invention further provides a passive component of a light curtain comprising one or more passive elements for redirecting a light beam received from an emitter of the light curtain such that the light beam leaving the passive component impinges on an associated receiver of the light curtain for detecting a light beam emitted by the emitter, wherein the passive component comprises one or more light redirecting optical modules as described above.

In the passive component, the light beam may be redirected directly by a single passive optical element or indirectly, i.e. the light beam is redirected in the passive component along an optical path involving two or more redirecting passive optical elements. The change in the direction of a light beam incident on a passive optical element may happen through refraction, reflection or a combination of both.

A passive component of a light curtain according to the present invention may and usually will comprise a plurality of sets of one or more redirecting passive optical elements, e.g. a plurality of sets of one or more mirrors or prisms, wherein each of these sets is associated with a different pair of an emitter and a receiver of the light curtain in that it receives a light beam from the emitter of the pair and redirects this light beam to the receiver of the pair, which detects the presence or absence of this light beam. A plurality of sets of one or more redirecting passive optical elements will usually be provided if the light curtain produces a plurality of beams by a corresponding plurality of emitters, wherein the interruption of each of these beams will be detected by a dedicated receiver associated with the emitter that has emitted this beam.

The invention may provide that the curved surfaces of the support unit and the carrier unit of the light redirecting optical module are rigidly fixed in relation to each other by a light curing adhesive, in particular a UV light curing adhesive.

Alternatively, the curved surfaces of the support unit and the carrier unit of the light redirecting optical module are rigidly fixed in relation to each other by mechanical locking means, in particular a screw or a pin. The screw or pin can be the same screw or pin that are part of the engagement means mentioned above or can be different from them.

In an embodiment, the passive component comprises a first redirecting passive optical element mounted in a module the design of which only allows a single position or discrete different positions of the optical element relative to the part of the module to be connected to a support structure of the passive component, e.g. a housing or a rail, and a second redirecting passive optical element which is an optical element mounted in a light redirecting optical module as described previously.

Differently from a light redirecting optical module according to the invention described previously, the design of the module carrying the first redirecting passive optical element does not provide for a continuous range of positions of the optical element relative to the carrier of the passive component in this embodiment.

The above-mentioned second light redirecting passive optical element can especially be a single mirror. Alternatively, the second light redirecting optical element may be a double mirror having two plane reflecting surfaces. Alternatively, both redirecting optical elements can be single mirrors having a single plane reflecting surface or double mirrors having two plane reflecting surfaces. The first and/or second redirecting passive optical elements may however also comprise a mirror design with more than two reflecting surfaces.

The invention also provides for a method of aligning passive optical elements in a passive component of a light curtain as described above, comprising: bringing the two curved surfaces of the carrier unit and the support unit into engagement with each other and keeping the surfaces engaged to each other so as to allow for a guided rotary movement of the two surfaces relative to each other, adjusting the passive optical element by moving the carrier unit relative to the support unit, rigidly fixing the two surfaces relative to each other so as to keep the passive optical element in its rotary position relative to the support unit.

The method may especially comprise adjusting the passive optical element in relation to a light beam from a calibration light source and to a target such that a light beam incident on the first redirecting passive optical element in the optical path of the passive component and redirected by the last redirected passive optical element in the optical path of the passive component hits the target. During calibration, the calibration light source and the target are placed at positions such that the direction of the incident light beam from the calibration light source and the position at which it is incident on the first redirecting passive optical element and the direction of a light beam leaving the passive component and the position at which it leaves the last redirecting passive optical element correspond to the respective directions and positions of a light beam emitted by the emitter of the light curtain and the light beam received by a receiver of the light curtain so that the passive optical elements of the passive component will be aligned with the corresponding emitter and receiver in the assembled light curtain and a light beam emitted by the emitter will be received by the corresponding receiver.

A method according to the invention may especially comprise: applying an adhesive between the engaging surfaces of the carrier unit and the support unit, adjusting the rotary position of the passive optical element, especially adjusting the rotary position of the passive optical element in relation to a light beam emitted from a calibration light source and a target, curing the adhesive with the passive optical element in the adjusted rotary position, wherein the engaging curved surfaces are fixed in the relative position corresponding to the result of the adjustment, i.e. to the adjusted rotary position.

The adhesive used in the present invention may especially be a UV light curing adhesive.

In a method according to the present invention as set out above, the passive component of the light curtain comprises at least two redirecting passive optical elements, wherein a first redirecting passive optical element is mounted at a fixed position and in a fixed orientation in relation to a second redirecting passive optical element, wherein the second redirecting passive optical element is mounted in the light redirecting optical module as described above and wherein the rotary position of the second passive optical element is adjusted by moving the carrier unit relative to the support unit while the position and orientation of the first passive optical element stay fixed.

According to this embodiment it is only necessary to align and calibrate one of the passive optical elements. Whereas the other passive optical element could, in principle, be mounted in a module that would allow for a change of the orientation of the passive optical element, this orientation is not changed in the alignment process. In particular, if the first passive optical element is mounted in a light redirecting optical module according to the invention, the relative position of the curved surfaces of the carrier unit and of the support unit, respectively, is preferably fixed at the start of the alignment process, e.g. by gluing these two surfaces together, and not changed during the subsequent alignment process. The first redirecting passive optical element may, however, also be mounted in a structure that has no parts the shape of which permits a relative movement. In such embodiments the redirecting passive optical element is rigidly kept in a position without any glue or other means for preventing a movement of adjoining surfaces of two parts of a mechanical design relative to each other.

The method of the present invention allows a much faster precise alignment of passive optical elements as it requires only a tilting movement of a single element to adjust its rotary position, following an initial, less precise alignment of the passive optical elements e.g. using a jig, in order to have all passive optical elements properly aligned. In particular, if the rotational axes of the rotary motion allowed by the passive optical modules according to the invention go through the center of a mirror or another passive optical element, a correction by a translational movement following a rotational movement is not necessary.

In case the optical safety light curtain comprises two passive elements only one of them needs to be precisely aligned following the initial, less precise placement and alignment of the passive elements in a passive component of the safety light curtain. In particular, if the last passive optical element in the optical path can be tilted around two axes perpendicular to the direction of the light beam leaving the passive element, a remaining small misalignment of the passive elements prior in the optical path can be corrected by appropriate rotational movements of the last passive optical element so as to properly aim the light beam at a target used in the alignment process. Thus, the misalignment of another passive optical element or other passive optical elements is corrected by only manipulating a single passive optical element. This also applies in case it is not the last passive optical element in the optical path that can be tilted, but an element earlier in the optical path, although in this case it may be more difficult to anticipate how the light beam will move relative to the target due to the redirection of the light beam by subsequent passive optical elements. In case of a larger number of passive optical elements in the passive component there may be more than one passive optical element that is capable of rotation relative to a support unit to correct misalignments, but also in this case the number of passive optical elements capable of rotation is less than the total number of passive optical elements.

In a specific embodiment comprising a tool for manually handling the passive element, the operator can easily catch the passive element by his or her fingers, which provides for a quick and easy alignment without needing any tools.

The use of a UV light curing adhesive provides for shorter hardening times, as the polymerization process is much faster so that the passive component can already be tested shortly after alignment. In contrast, adhesives used previously required many hours to set before the passive component could be tested. Additionally, the UV light curing adhesive, in its form prior to curing, can serve as a lubricant providing for friction - free movement between the carrier unit and the support unit.

Further features, properties and advantages will become apparent from the following description of specific embodiments with reference to the accompanying drawings.

Fig.1 is a schematic illustration of the general arrangement of a safety light curtain with an active component comprising active electronic elements and a passive component that only comprises passive optical elements.

Fig. 2 is a cross-section of an embodiment of a passive optical module according to the present invention along its longitudinal direction.

Fig. 3 shows a front view of a passive optical module according to this embodiment.

Fig. 4 shows a passive optical module according to a modified embodiment in a mounted position in a longitudinal cross-section, wherein the cutting plane is shifted from the center line.

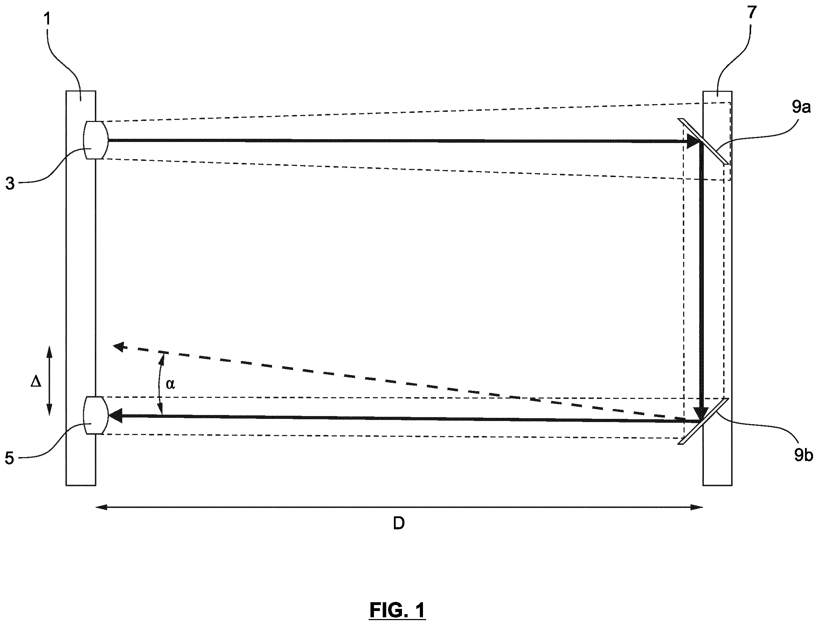

Fig. 1 schematically illustrates a typical arrangement of a safety light curtain in which the invention may be applied. The safety light curtain illustrated in Fig. 1 consists of an active component 1 comprising an emitter 3 and a receiver 5, which are mounted to a housing of the active component together with respective optics and which are spaced apart from each other in the longitudinal direction of the housing, and a passive component 7 comprising two mirrors 9a and 9b, which are spaced from each other in the longitudinal direction of passive component 7. The function of the passive component 7 is not only to return the incident light beam to the active component 1, but also to translate the light beam by the exact distance separating the emitter 3 and the receiver 5 along the longitudinal direction of the housing of active component 1. In a specific embodiment the mirror 9a is a double mirror having two reflecting mirror faces and the mirror 9b is a single mirror having one reflecting mirror face. It is, however, also possible to use a single mirror as the mirror 9a and a double mirror as the mirror 9b or two single mirrors or two double mirrors. The last mirror 9b in the optical path reflects the light beam received by the passive component 7 to the receiver 5 and is spaced from the receiver 5 by a working distance D, which typically ranges from 0.5 m to 8 m in practical applications.

Fig. 1 illustrates the spread of the light beam in the system. As is schematically indicated in the drawing, mirror 9a serves to limit the aperture angle of the light beam so as to direct a light beam with no or little divergence to mirror 9b, which in turn reflects a light beam with no or little divergence to receiver 5.

Fig. 1 further illustrates the effect of a rotational misalignment of mirror 9b. If the misalignment angle is designated by $\alpha$, the displacement $\Delta$ of the light beam impinging on the active component in the longitudinal direction of the housing of active component 1 is given by

$$\Delta = \tan \alpha \, D.$$

Accordingly, depending on the working distance D, even a small angular misalignment may cause a relatively large displacement. For example, if the angular error is 0.2°, with a working distance of 8 m the displacement $\Delta$ will be about 8 mm, which is typically enough to make the light beam miss the receiver.

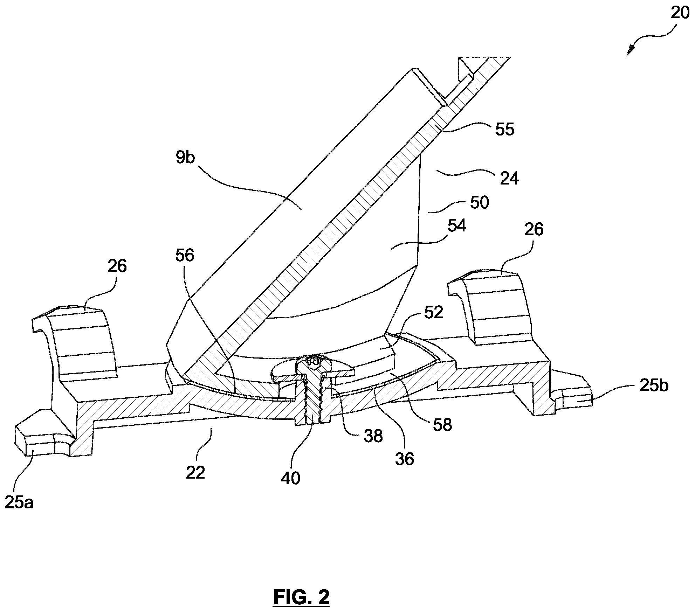

In the embodiments illustrated in Fig. 2 to 4, the mirror 9b is part of a passive optical module 20, which is mounted in the passive component 7 of the safety light curtain. The passive optical modules 20 shown in Fig. 2 to Fig. 4 have a design for a mirror having a single mirror face that can be aligned with other optical components by tilt movements, but can also be used for a double mirror, comprising two mirror faces, or more complex mirror systems for redirecting the received light. The passive optical module 20 comprises a support unit 22 that is to be mounted to the housing of passive component 7 or another rigid structure of passive component 7 for carrying the passive optical elements, such as a rail receiving passive optical elements, and a carrier unit 24, which is rotatable with regard to the support unit 22 and which carries the single face mirror 9b. The support unit 22 comprises two tabs 25a and 25b, which form connection areas for the connection to the housing or another support of the passive component 7 and, at each end, two protruding hooks 26 with a curved surface at opposite sides, which surface is designed to cooperate with a guiding structure 28 of the passive component 7 or another guiding element so that the passive optical module 20 is slidable along this guiding element and its orientation with regard to the longitudinal direction of this guiding element is fixed. The number of hooks 26 may vary. For example, hooks 26 may only be provided at one side of support unit 22, single hooks may be provided at each end, but at different sides, or one or more hooks between the ends of support unit 22, e.g. in the middle, at one or both sides may be used. At its side facing the carrier unit 24, the support unit 22 furthermore comprises a concave curved sliding surface 36 and a protrusion 38 with a threaded bore designed to receive a clamping screw 40 and protruding from curved surface 36.

The carrier unit 24 comprises a mirror holder 50 supporting mirror 9b, which comprises a bottom part 52, a vertical part 54 and a slanted part 55. At its side facing the support unit 22 the bottom part 52 of mirror holder 50 has a convex curved surface 56, the curvature of which matches the curvature of the curved surface 36 so that these two curved surfaces, when engaged with each other, form a rotary joint with one or more rotational degrees of freedom. The axis or axes of rotation of this rotary joint preferably intersect the center of mirror 9b. In a specific embodiment the surfaces 36 and 56 are spherical surfaces and thus allow for a movement with three rotational degrees of freedom. These spherical surfaces may especially be shaped and positioned relative to the mirror 9b in such a way that the three axes of rotation intersect the center of mirror 9b.

The curved surface 56 has a longitudinal cutout 58 for receiving the protrusion 38 of support unit 22 and/or the stem of screw 40. Cutout 58 is open to one end of the carrier unit 24. The width of cutout 58, i.e. the dimension in the direction transverse to the longitudinal direction of cutout 58, is dimensioned such that curved surface 56 is moveable relative to protrusion 38 and/or screw 40 in the direction perpendicular to the longitudinal direction of cutout 58 so as to allow a tilt movement of surface 56 relative to surface 36 limited by the rim of cutout 58 and the protrusion 38 or screw 40.

When screwed in to the threaded bore of protrusion 38, screw 40 serves to keep the surfaces 36 and 56 in engagement. The width of the cutout 58 is dimensioned such that the head of screw 40 extends beyond the longitudinal rim of cutout 58 on one or both sides when screw 40 has been screwed into the threaded bore of protrusion 38, thereby forming a stop for a movement of the bottom part 52 of mirror holder 50 relative to the curved surface 36 of support unit 22 in the direction of the longitudinal axis of the bore of protrusion 38. If a larger degree of rotational movement perpendicular to the longitudinal axis of cutout 58 and thus a larger width of cutout 58 is required, which may exceed the diameter of the head of screw 40, a washer 59 may be interposed between the head of screw 40 and the top of bottom part 52 of holder 50, wherein washer 59 extends beyond the longitudinal rim of cutout 58 on one or both sides and screw 40 limits the movement of washer 59 when screwed into the threaded bore of protrusion 38.

When aligning mirror 9b, screw 40 will be tightened to such a degree that the two curved surfaces 36 and 56 are moveable relative to each other in all rotational degrees of freedom permitted by the shape of surfaces 36 and 56 while keeping curved surface 56 of bottom part 52 of mirror holder 50 and the curved surface 36 of support unit 22 in engagement so as to allow a guided movement of support unit 22 and carrier unit 24 relative to each other. Thereby a rotary joint with one or more rotational degrees of freedom, preferably three rotational degrees of freedom is formed.

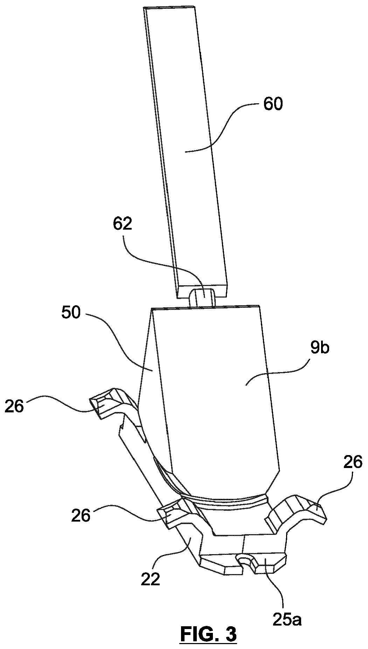

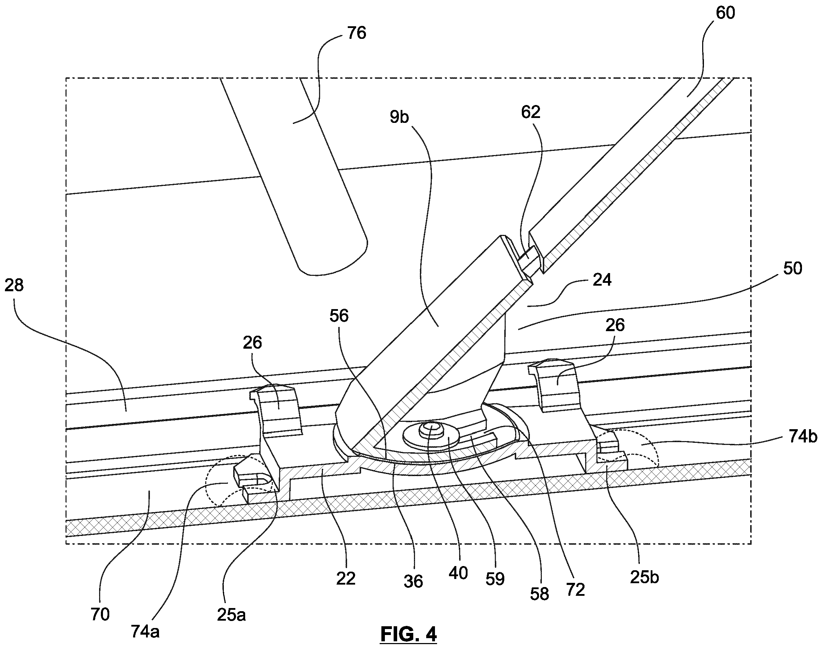

As can be best seen in Fig. 3 or 4, optical module 20 furthermore comprises a handle 60 that is fixed to the mirror holder 50 and in a specific embodiment formed as one piece with vertical part 54 of mirror holder or mirror holder 50 in general. In one embodiment, handle 60 is designed so that it can be gripped by an operator for manually aligning the mirror 9b with regard to a target corresponding to receiver 5 and its counterpart mirror 9a. In other embodiments, the handle 60 can be designed to be manipulated by a robot or another automated tool. The handle 60 is connected to the holder 50 through a separation region 62. After installation and alignment, the handle 60 can be severed from the holder 50 in the separation region 62 by cutting or breaking it off or otherwise separating it from the mirror holder 50. To this end, separation region 62 may have a smaller thickness or diameter than the handle 60, a predetermined breaking point and/or a region of reduced strength of the material to facilitate breaking or cutting handle 60 off.

When the passive component 7 is assembled and its optical elements are aligned, a passive optical module 20 comprising single mirror 9b and a further optical module comprising double mirror 9a are placed on a support 70 of passive component 7 at the positions provided in the product specification so that the mirrors 9a and 9b are generally aligned and only minor residual misalignments remain, if at all. The position of the modules can be fixed by suitable means at this stage, e.g. using a jig. The support 70 may, for example, be a part of the housing of passive component 7 or a rail that is part of passive component 7, wherein the modules comprising the mirrors are inserted between side walls of the rail. At this stage of the process the passive optical module 20 is in a state in which the curved surfaces 36 and 56 are moveable with respect to each other. In order to carry out the precise alignment of mirrors 9a and 9b, a calibration light source corresponding to emitter 3 and a target corresponding to receiver 5 are arranged relative to the mirrors 9a and 9b such that a light beam emitted by the calibration light source will impinge on mirror 9a, be reflected to mirror 9b and then reflected by mirror 9b, wherein the calibration light source and the targets are placed at positions corresponding to the emitter 3 and the receiver 5 of the active component 1 such that a light beam emitted by the emitter of the active component 1 will impinge on receiver 5, if the light beam emitted by the calibration light source and passing through passive component 7 hits the target. Keeping the position and orientation of mirror 9a fixed, the rotational position of mirror 9b relative to mirror 9a and the target corresponding to the receiver 5 is adjusted by moving curved surfaces 36 and 56 relative to each other, using handle 60, such that the calibration light beam hits the target. Subsequently the position of mirrors 9a and 9b and the relative position of curved surfaces 36 and 56 are fixed using a fast curing glue and the handle 60 is removed. Thus, the precise alignment only involves mirror 9b, whereas the position of mirror 9a and its orientation relative to mirror 9b and to the calibration light source stays fixed. Thus, by manipulating only the single mirror 9b, in particular by only tilting it, it is possible to correct not only a possible misalignment of this mirror, but also to simultaneously correct a misalignment of the double mirror 9a.

More specifically, in order to prepare passive optical module 20 for assembly and alignment, a UV light curing adhesive is applied to the curved surface 36 of support unit 22 in a region 72 where it is to engage the mating curved surface 56 of carrier unit 24. The carrier unit 24 is then placed on the support unit 22 so that curved surfaces 36 and 56 are in engagement with each other, with a layer of UV light curing adhesive between them that forms a lubricant which facilitates the relative movement of surfaces 36 and 56 and allows for essentially friction-free movement of the surfaces relative to each other. Surfaces 36 and 56 are secured to each other by screw 40, given the case using washer 59, wherein screw 40 is screwed into the bore of protrusion such that surfaces 36 and 56 are in engagement with each other, but still moveable relative to each other. The support unit 22 is placed on a support 70 of passive component 7 and hooks 26 are engaged with guiding structure 28 of the passive component 7. The position of the passive optical module 20 along guiding structure 28 is adjusted and an UV light curing adhesive is applied between tabs 25a and 25b and support 70 at glue deposition points 74a and 74b.

The rotational position of mirror 9b relative to mirror 9a and to the target corresponding to receiver 5 is adjusted using handle 60. When the mirror 9b is correctly aligned, the UV light curing adhesive at adhesive deposition region 72 and adhesive deposition points 74a and 74b is cured using a UV lamp 76. The screw 40 may then be removed. Alternatively it may be left in place and or tightened so as to clamp support unit 22 and carrier unit 24 together as an additional means of securing the rotational position of mirror 9b. One may also proceed by first curing the UV light curing adhesive at adhesive deposition points 74a and 74b, thereby fixing the position of passive optical module 20 along guiding structure 28, and then adjusting the rotational position of mirror 9b by tilting it relative to the support unit 22 to align it properly with the target and mirror 9a and subsequently fixing it by curing the adhesive in region 72.

In a variant of the process described above, the module carrying the mirror 9a and the support unit 22 of the passive optical module 20 are placed and secured at the positions provided for in the product specification. Subsequently UV light curing adhesive is applied to region 72 of curved surface 36 of support unit 22 and then the carrier unit 24 is mounted on the support unit 22 and secured by screw 40 as described above such that curved surfaces 36 and 56 are still moveable relative to each other. Subsequently mirror 9b is aligned and the positions of the modules carrying mirrors 9a and 9b and the relative positions of curved surfaces 36 and 56 are permanently fixed by curing the UV light curing adhesive, as described above.

In order to facilitate curing by means of UV light, the material of the passive optical module 20 in region 72 and in the region of the adhesive deposition points 74a and 74b can be chosen to be transparent for UV light at the wavelengths required for curing, i.e. it has a high transmission coefficient for UV light at these wavelengths. In particular, the tabs 25a and 25b and/or the bottom part 52 of mirror holder 50 in region 72 can consist of a material transparent for UV light. In a specific embodiment, the entire holder 50 of the carrier unit is made of a material that is transparent for UV light.

The use of a UV light curing adhesive has the advantage of quick setting times, but other types of adhesive can be used as well for fixing the passive optical module 20 in place and/or fixing the relative position of support unit 22 and carrier unit 24. It is also possible to secure support unit 22 and carrier unit 24 in place relative to each other only by screw 40 or other mechanical means. If a clamping function is not desired or required, the screw 40 may also be replaced by a pin inserted in a corresponding bore of the support unit.

Whereas the passive optical module 20 was described as a part of the passive component 7 that is separate from the housing of passive component 7 or a support structure of passive component 7, this does not need to be necessarily the case. It could also be envisaged that the support unit 22 is formed integral with another part of the passive component 7, e.g. a part of a housing or a mounting rail, at the position provided for in the product specification so that it forms a single piece with this part and the carrier unit 24 is mounted to this integral support unit.

Whereas the embodiments of the passive optical module shown in Fig. 2 to 4 have a protrusion for receiving the clamping screw, the protrusion may be omitted and a threaded bore for receiving the clamping screw may be formed in the curved surfaced of the support unit. Likewise, the protrusion may be shorter so that the screw will not be fully received in the threaded bore of the protrusion when the screw has been tightened such that it allows a relative movement between surfaces 36 and 56.

Whereas in the embodiments illustrated in the drawings, mirrors were used as passive elements, other passive elements, such as prisms, can be used or a combination of one or more mirrors with one or more other passive elements may be used. In particular, the carrier unit described above may carry a prism or another passive optical element or an optical arrangement comprising a mirror or prism in combination with one or more other, in particular different, passive optical elements.

Whereas the drawings only show a single pair of mirrors 9a and 9b in the passive component 7 for ease of representation, it should be understood that the passive component 7 may comprise a plurality of sets of one or more redirecting passive optical elements, e.g. a plurality of pairs of mirrors like mirrors 9a and 9b, wherein each set is associated with a different pair of an emitter and a receiver of the light curtain and designed to redirect and return a light beam received from the emitter of the pair to the receiver of the pair.

The features disclosed in the description, the claims and the drawings can be material for the realization of the invention in its various embodiments within the scope of the appended claims, both on their own and in any combination thereof.

**Claims**

1. Light redirecting optical module for a light curtain comprising

a passive optical element for changing the direction of an incident light beam,

a carrier unit to which the passive optical element is fixed in a rigid manner,

a support unit,

wherein the carrier unit has a curved surface at a side facing away from the passive optical element and the support unit has a complementary curved surface facing the curved surface of the carrier unit, wherein the curved surfaces together form a rotary joint,

engagement means for keeping the two curved surfaces engaged to each other so as to allow for a guided rotary movement of the two surfaces relative to each other.

2. Light redirecting optical module according to claim 1, wherein the passive optical element is a single mirror having a single reflecting surface or a double mirror having two plane reflecting surfaces.

3. Light redirecting optical module according to claim 2, wherein the rotary axes of the rotary joint intersect the center of the mirror surface of the single mirror or a symmetry point of the double mirror.

4. Light redirecting optical module according to one of claims 1 to 3, comprising a handle for moving the carrier unit relative to the support unit to align a light beam redirected by the passive optical element with a target corresponding to a receiver of the light curtain.

5. Light redirecting optical module according to claim 4, wherein the handle is connected to the carrier unit and can be removed from the carrier unit.

6. Light redirecting optical module according to one of claims 1 to 5, wherein the engagement means comprise a screw connecting the carrier unit and the support unit.

7. Light redirecting optical module according to one of claims 1 to 6, wherein the carrier unit and/or the support unit are made of a material transparent to UV light at least in a region where the curved surfaces of the carrier unit and the support unit are in engagement with each other.

8. Passive component of a light curtain comprising one or more passive elements for redirecting a light beam received from an emitter of the light curtain such that the light beam leaving the passive component impinges on an associated receiver of the light curtain for detecting a light beam emitted by the emitter, wherein the passive component comprises one or more light redirecting optical modules according to one of claims 1 to 7.

9. Passive component of a light curtain according to claim 8, wherein the curved surfaces of the support unit and the carrier unit of the light redirecting optical module are rigidly fixed in relation to each other by a UV light curing adhesive

10. Passive component of a light curtain according to claim 8, wherein the curved surfaces of the support unit and the carrier unit of the light redirecting optical module are rigidly fixed in relation to each other by mechanical locking means.

11. Passive component of a light curtain according to claim 8 comprising a first redirecting passive optical element mounted in a module the design of which only allows a single position or discrete different positions of the optical element relative to the part of the module to be connected to a support structure of the passive component and a second redirecting passive optical element which is an optical element mounted in a light redirecting optical module according to one of claims 1 to 7.

12. Method of aligning passive optical elements in a passive component of a light curtain according to one of claims 8 to 11, comprising:

bringing the two curved surfaces of the carrier unit and the support unit into engagement with each other and keeping the surfaces engaged to each other so as to allow for a guided rotary movement of the two surfaces relative to each other,

adjusting the passive optical element by moving the carrier unit relative to the support unit,

rigidly fixing the two surfaces relative to each other so as to keep the passive optical element in its rotary position relative to the support unit.

13. Method according to claim 12, further comprising:

applying an adhesive between the engaging surfaces of the carrier unit and the support unit,

adjusting the rotary position of the passive optical element,

curing the adhesive with the passive optical element in the adjusted rotary position.

14. Method according to claim 13, wherein the adhesive is a UV light curing adhesive.

15. Method according to one of claims 12 to 14, wherein the passive component of the light curtain comprises at least two redirecting passive optical elements, wherein a first redirecting passive optical element is mounted at a fixed position and in a fixed orientation in relation to a second redirecting passive optical element, wherein the second redirecting passive optical element is mounted in the light redirecting optical module according to one of claims 1 to 7 and wherein the rotary position of the second passive optical element is adjusted by moving the carrier unit relative to the support unit while the position and orientation of the first passive optical element stay fixed.

EP 4 474 872 A1

**FIG. 1**

FIG. 2

FIG. 3

**FIG. 4**

EP 4 474 872 A1

EP 4 474 872 A1

Europäisches
Patentamt
European
Patent Office
Office européen
des brevets

# EUROPEAN SEARCH REPORT

Application Number

EP 23 17 8491

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/073793 A1 (MEYER JAY L [US] ET AL) 25 March 2010 (2010-03-25) | 1-7 | INV. G01V8/14 |
| Y | * figures 1-3,5-7 * | 8-15 | G02B7/182 |
| | * paragraphs [0004] - [0006], [0016] - [0024], [0027], [0028], [0039] - [0046] * | | G02B26/08 |
| | * paragraphs [0052], [0056] - [0063] * ----- | | |
| X | US 4 764 004 A (YAMADA TAKASHI [JP] ET AL) 16 August 1988 (1988-08-16) | 1-6 | |
| Y | * figures 1,2,3,5,7 * | 8-15 | |
| A | * column 1, line 21 - line 62 * | 7 | |
| | * column 2, line 1 - line 9 * | | |
| | * column 4, line 16 - line 56 * | | |
| | * column 5, line 1 - line 35 * | | |
| | * column 5, line 57 - column 6, line 9 * | | |
| | * column 6, line 21 - line 56 * | | |
| | * column 6, line 66 - column 7, line 23 * ----- | | |
| X | DE 19 79 769 U (LECO GES M B H FLACHGLASBEARBE [DE]) 29 February 1968 (1968-02-29) | 1-3,7 | |
| Y | * figures 5-8 * | 8,11,12, 15 | TECHNICAL FIELDS SEARCHED (IPC)   G01V |
| A | * page 2, line 1 - line 7 * | | G02B |
| | * page 3, line 11 - line 21 * | 4-6,9, | F16P |
| | * page 9 * ----- | 10,13,14 | |
| Y | US 2014/313605 A1 (BESSLER MICHAEL [DE] ET AL) 23 October 2014 (2014-10-23) | 8-15 | |
| A | * figures 1-4, 6 * | 1-7 | |
| | * claims 1-4,9-12,15 * | | |
| | * paragraphs [0044], [0045], [0047] - [0051], [0054] - [0064], [0066] - [0071] * | | |
| | * paragraphs [0074] - [0076], [0079], [0084] - [0088] * ----- | | |

The present search report has been drawn up for all claims

| Place of search | Date of completion of the search | Examiner |
|---|---|---|
| The Hague | 6 November 2023 | Sartoni, Giovanni |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................

& : member of the same patent family, corresponding document

EPO FORM 1503 03.82 (P04C01)

14

## ANNEX TO THE EUROPEAN SEARCH REPORT
## ON EUROPEAN PATENT APPLICATION NO.

EP 23 17 8491

This annex lists the patent family members relating to the patent documents cited in the above-mentioned European search report.
The members are as contained in the European Patent Office EDP file on
The European Patent Office is in no way liable for these particulars which are merely given for the purpose of information.

06-11-2023

| Patent document cited in search report | | Publication date | Patent family member(s) | | Publication date |
|---|---|---|---|---|---|
| US 2010073793 | A1 | 25-03-2010 | EP 2335109 | A1 | 22-06-2011 |
| | | | IL 211438 | A | 31-01-2013 |
| | | | US 2010073793 | A1 | 25-03-2010 |
| | | | WO 2010036447 | A1 | 01-04-2010 |
| US 4764004 | A | 16-08-1988 | KR 880002700 | A | 10-05-1988 |
| | | | US 4764004 | A | 16-08-1988 |
| DE 1979769 | U | 29-02-1968 | NONE | | |
| US 2014313605 | A1 | 23-10-2014 | CN 104111514 | A | 22-10-2014 |
| | | | DE 102013206892 | A1 | 23-10-2014 |
| | | | JP 5831581 | B2 | 09-12-2015 |
| | | | JP 2014211634 | A | 13-11-2014 |
| | | | US 2014313605 | A1 | 23-10-2014 |

EPO FORM P0459

For more details about this annex : see Official Journal of the European Patent Office, No. 12/82